# EUROPEAN PATENT APPLICATION

(11) **EP 4 586 376 A1**
(43) Date of publication of application: **16.07.2025**
(21) Application number: 24217183.3
(22) Date of filing: 03.12.2024
(51) Int. Cl.: H01M 50/184, H01M 50/186, H01M 50/193, H01M 50/375, H01M 50/198, H01M 50/342, H01M 50/383, H01M 50/103

(54) **POWER STORAGE DEVICE**

(30) Priority: 12.01.2024 JP 2024003420
(71) Applicant: Prime Planet Energy & Solutions, Inc., Chuo-ku, Tokyo 103-0022 (JP)
(72) Inventor: UCHIDA, Yozo, Tokyo 103-0022 (JP)
(74) Representative: Kuhnen & Wacker Patent- und Rechtsanwaltsbüro PartG mbB

(57) **Abstract**

A power storage device (1) includes a case (10) having a case member (21) made of metal and including a valve hole (21i), a safety valve member (30) made of metal and including a safety valve portion (31) of a pressure relief type which fractures and opens when the internal pressure of the case (10) exceeds a valve opening pressure, and a valve fixing resin member (40) made of resin and encircling the safety valve member. The valve fixing resin member (40) is interposed between a hole surrounding portion (23) of the case member (21) surrounding the valve hole (21i) and a peripheral portion (33) of the safety valve member (30) to be hermetically joined to these portions over the entire circumferences and fix the safety valve member (30) to the case member (21).

## Description

### BACKGROUND

### Technical Field

The disclosure relates to a power storage device in which a safety valve portion of a pressure relief type is provided in a case member that is made of metal and constitutes a case.

### Related Art

As a power storage device, a battery is known in which a safety valve portion of a pressure relief type is provided in a case made of metal. The safety valve portion fractures and opens when the internal pressure of the case exceeds the valve opening pressure, to release gas in the case to the outside of the case. The safety valve portion is formed by reducing the thickness of a part of a case member (e.g., a case lid member) by press working or partially forming a groove for fracturing and opening by press working. One example of the battery equipped with the safety valve portion is described in the Patent Document 1.

### Related Art Documents

### Patent Documents

Patent Document 1: JP2018-032605A

### SUMMARY

### Technical Problems

However, when the safety valve portion is formed integrally with the case member by pressing a part of the case member as described above, it may be difficult to properly form the safety valve portion in a desired shape, depending on the thickness and material of the case member. For example, if the thickness of the case member is increased as the size of the battery increases, it may be difficult to form the safety valve portion having a thickness that provides a desired valve opening pressure and a suitable thickness at the bottom of the groove as an integral part of the case member.

The disclosure was made in view of the situation as described above, and provides a power storage device in which a safety valve portion of a pressure relief type can be easily provided in a case member, regardless of the thickness and material of the case member made of metal.

### Means of Solving the Problems

(1) One aspect of the disclosure for solving the above problem is a power storage device including a case having a case member comprising metal and including a valve hole, a safety valve member comprising metal and including a safety valve portion of a pressure relief type configured to fracture and open when an internal pressure of the case exceeds a valve opening pressure, and a valve fixing resin member comprising resin and encircling the safety valve member. The valve fixing resin member is interposed between a hole surrounding portion of the case member surrounding the valve hole and a peripheral portion of the safety valve member to be hermetically joined to the hole surrounding portion and the peripheral portion over the entire circumferences and fix the safety valve member to the case member.

In the power storage device described above, the safety valve member including the pressure relief type safety valve portion that fractures and opens when the internal pressure of the case rises is fixed to the case member via the valve fixing resin member encircling the safety valve member or extending endlessly around the safety valve member. The safety valve member is a separate member from the case member and is formed separately from the case member; therefore, the safety valve member of a desired shape can be properly formed without being affected by the thickness and material of the case member. Then, the safety valve member is fixed to the case member via the valve fixing resin member, so that the safety valve portion can be easily provided in the case member.

The valve fixing resin member made of resin is softer than the case member made of metal. Therefore, even if distortion occurs in the case member when the case is formed using the case member, distortion is less likely or unlikely to occur in the safety valve member connected to the case member via the valve fixing resin member. Thus, in the power storage device described above, even if distortion occurs in the case member, there is little distortion in the safety valve member, and the adverse influence on the valve opening pressure of the safety valve portion, for example, can be reduced.

Examples of the "power storage device" include secondary batteries, such as a lithium-ion secondary battery, sodium-ion secondary battery, and a calcium-ion secondary battery, and capacitors, such as a lithium-ion capacitor.

(2) In the power storage device described in (1) above, the valve fixing resin member may comprise a thermoplastic resin material, and the safety valve member and the valve fixing resin member may constitute a safety valve of a thermal relief type configured to open when the resin material softens or melts due to a temperature rise of the valve fixing resin member.

The safety valve member and the valve fixing resin member constitute the thermal relief type safety valve that opens with a rise in temperature. That is, the above power storage device has the thermal relief type safety valve as well as the pressure relief type safety valve portion. This can make the power storage device even safer.

(3) In the power storage device described in (1) or (2) above, the hole surrounding portion of the case member may include a hole surrounding roughened portion that extends endlessly over the entire circumference of the hole surrounding portion and has nanocolumns formed by joining particles derived from the metal that forms the case member together like strings of beads into the form of columns and having a height of 50 nm or more, the nanocolumns standing numerously on the hole surrounding roughened portion, and the valve fixing resin member may be hermetically joined to the hole surrounding roughened portion over the entire circumference such that the resin material that forms the valve fixing resin member fills gaps between the nanocolumns standing numerously.

In the power storage device described above, the hole surrounding portion of the case member is provided with the nano-level (nano-order) hole surrounding roughened portion on which the nanocolumns described above stand numerously, and the valve fixing resin member is hermetically joined to the hole surrounding roughened portion with the resin material filling gaps between the nanocolumns standing numerously. Therefore, the seal performance and joining strength between the hole surrounding portion of the case member and the valve fixing resin member can be enhanced.

(4) In the power storage device described in any one of (1) to (3) above, the peripheral portion of the safety valve member may include a valve periphery roughened portion that extends endlessly over the entire circumference of the peripheral portion and has nanocolumns formed by joining particles derived from the metal that forms the safety valve member together like strings of beads into the form of columns and having a height of 50 nm or more, the nanocolumns standing numerously on the valve periphery roughened portion, and the valve fixing resin member may be hermetically joined to the valve periphery roughened portion over the entire circumference such that the resin material that forms the valve fixing resin member fills gaps between the nanocolumns standing numerously.

In the power storage device described above, the peripheral portion of the safety valve member is provided with the nano-level valve periphery roughened portion on which the nanocolumns stand numerously, and the valve fixing resin member is hermetically joined to the valve periphery roughened portion with the resin material filling gaps between the nanocolumns standing numerously. Therefore, the seal performance and joining strength between the peripheral portion of the safety valve member and the valve fixing resin member can be enhanced.

(5) In the power storage device described in any one of (1) to (4) above, the safety valve member may be formed from an aluminum plate having a thickness of 500 µm or less, and the safety valve portion may be press-formed.

Since the safety valve member is formed using a thin aluminum plate with the thickness of 500 µm or less, the safety valve portion can be easily and highly accurately formed by press forming. Thus, the power storage device is equipped with the safety valve member in which the valve opening pressure of the safety valve portion is particularly stable.

(6) In the power storage device described in (5) above, the case member may be formed from an aluminum plate having a thickness of 600 µm or more.

When the safety valve portion is formed as an integral part of the case member by pressing a part of the case member as in the known power storage device, it may be difficult to press-form the safety valve portion integrally with the case member if the thickness of the case member made of aluminum is equal to or greater than 600 µm. In contrast, in the power storage device described above, the case member and the safety valve member are separate members; therefore, the safety valve portion can be easily and highly accurately press-formed in the safety valve member, regardless of the thickness of the case member. Accordingly, even if the case member is formed from an aluminum plate with the thickness of 600 µm or more, the power storage device is equipped with the safety valve member in which the valve opening pressure of the safety valve portion is particularly stable.

(7) In the power storage device described in (5) above, the case member may comprise a metal other than aluminum.

In some cases, it is desirable to use a case member made of a metal, such as stainless steel, other than aluminum as the case member. In the power storage device described above, since the case member and the safety valve member are separate members, the safety valve portion can be easily and highly accurately press-formed in the safety valve member, regardless of the material of the case member. Accordingly, the power storage device described above is equipped with the safety valve member in which the valve opening pressure of the safety valve portion is particularly stable, even though the case member is made of a metal other than aluminum.

### BRIEF DESCRIPTION OF THE DRAWINGS

FIG. 1 is a perspective view of a battery according to one embodiment;
FIG. 2 is a partial cross-sectional view of the battery according to the embodiment, taken along the battery height direction and the battery width direction;
FIG. 3 is a top view of a safety valve portion and its vicinity of the battery according to the embodiment;
FIG. 4 is a cross-sectional view as seen in the direction of arrows in FIG. 3, showing the safety valve portion and its vicinity of the battery according to the embodiment;
FIG. 5 is an enlarged cross-sectional view showing an enlarged view of a junction between a hole surrounding portion of a case lid member (or a peripheral portion of a safety valve member) and a valve fixing resin member;
FIG. 6 is a flowchart of a method of manufacturing the battery according to the embodiment; and
FIG. 7 is an explanatory view showing the manner of forming a plurality of bowl-shaped recesses and nanocolumns standing numerously on the bowl-shaped recesses through scanning with a pulsed laser beam in a case roughening step (or valve roughening step or terminal roughening step), in connection with the method of manufacturing the battery according to the embodiment.

### DETAILED DESCRIPTION OF THE EXEMPLARY EMBODIMENTS

### Embodiment

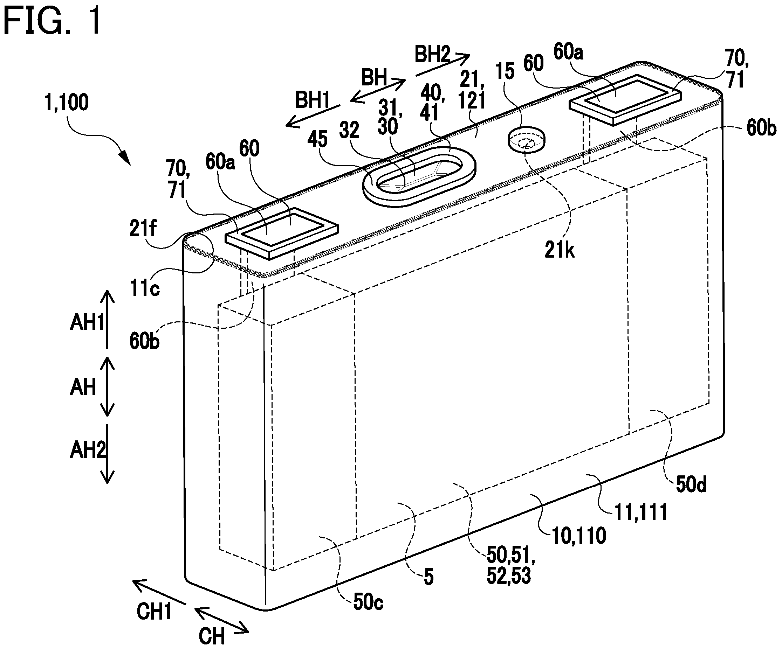

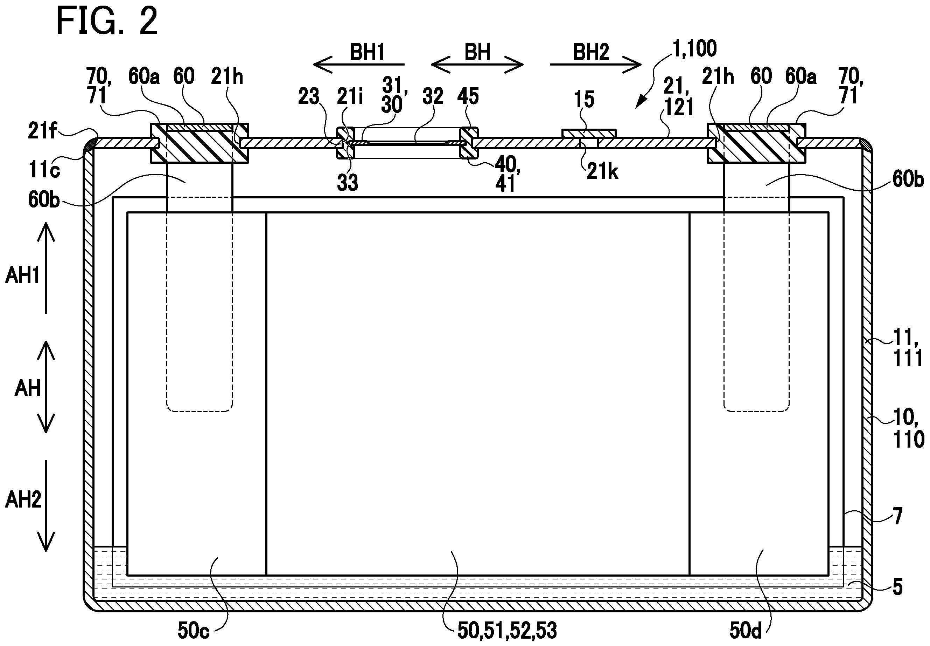

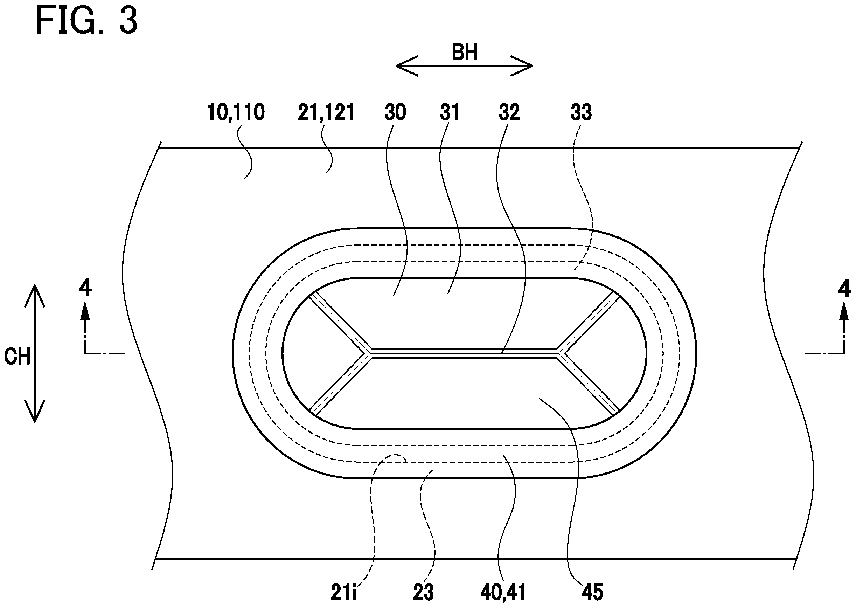

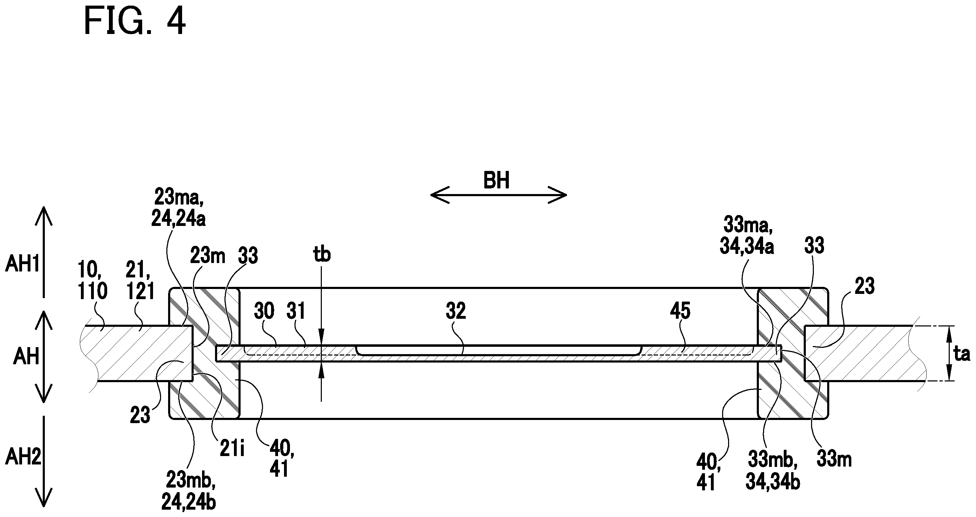

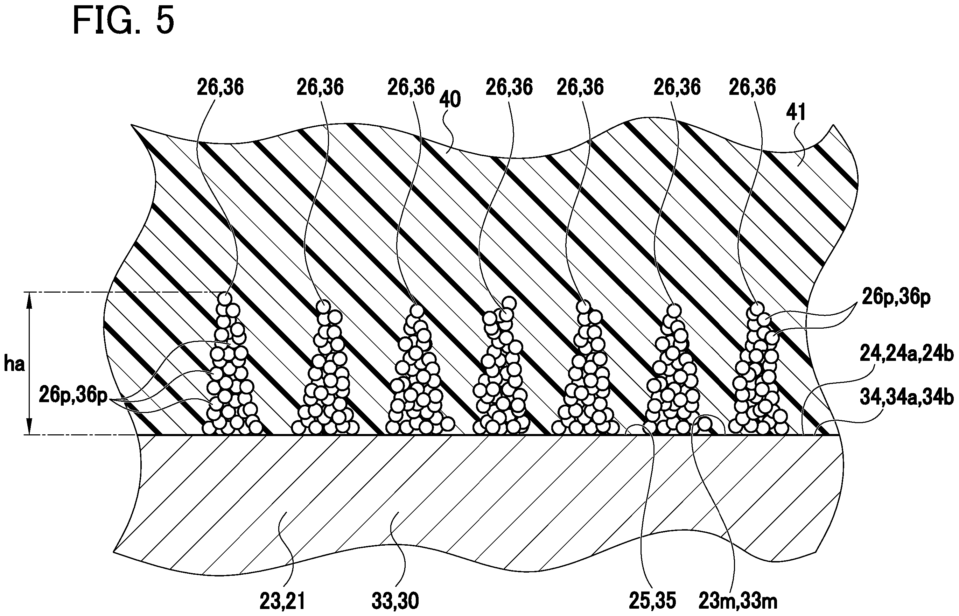

In the following, one embodiment of the disclosure will be described with reference to the drawings. FIG. 1 is a perspective view of a battery (one example of the power storage device of the disclosure) 1 according to the embodiment, and FIG. 2 is a partial cross-sectional view of the battery 1. FIG. 3 is a top view of a safety valve portion 31 and its vicinity of the battery 1, and FIG. 4 is a cross-sectional view thereof. FIG. 5 is an enlarged cross-sectional view of a junction between a hole surrounding portion 23 of a case lid member 21 (or a peripheral portion 33 of a safety valve member 30) and a valve fixing resin member 40. In the following description, the battery height direction AH, battery width direction BH, and battery thickness direction CH of the battery 1 are defined as the directions indicated in FIG. 1 and FIG. 2.

The battery 1 is a sealed lithium-ion secondary battery of a rectangular (rectangular parallelepiped) shape, which is installed on a vehicle, such as a hybrid vehicle, plug-in hybrid vehicle, or an electric vehicle. The battery 1 consists of a case 10 made of metal and provided with the safety valve portion 31, an electrode body 50 and electrolyte 5 housed in the case 10, positive and negative terminal members 60 fixed to the case 10 via respective terminal fixing resin members 70, and so forth. The electrode body 50 is covered with an insulating holder 7 in the case 10. The insulating holder 7 is formed from an insulating film and shaped like a bag that opens to the upper side AH1 in the battery height direction AH.

The electrode body 50 is of a rectangular parallelepiped, stacked type, and has a plurality of rectangular positive electrode sheets 51 and a plurality of rectangular negative electrode sheets 52 alternately stacked in the battery thickness direction CH via rectangular separators 53 each made from a porous resin film. In the electrode body 50, on one side BH1 in the battery width direction BH, current collecting foils of the respective positive electrode sheets 51 are superposed in the battery thickness direction CH to form a positive current collector 50c. Also in the electrode body 50, on the other side BH2 in the battery width direction BH, current collecting foils of the respective negative electrode sheets 52 are superposed in the battery thickness direction CH to form a negative current collector 50d.

The case 10 is shaped like a rectangular parallelepiped box and made of metal (aluminum in this embodiment). The case 10 consists of a case body 11 that is in the form of a rectangular tube with a bottom and a rectangular opening portion 11c and houses the electrode body 50 therein, and a case lid member 21 in the form of a rectangular plate that closes the opening portion 11c of the case body 11. The opening portion 11c of the case body 11 and a peripheral portion 21f of the case lid member 21 are hermetically welded together over the entire circumference thereof. In this embodiment, the case lid member 21 corresponds to the "case member" mentioned above. The case lid member 21 is formed from an aluminum plate having a thickness ta (see FIG. 4) of 600 µm or more (in this embodiment, the thickness ta is equal to 600 µm). The case lid member 21 is provided with a liquid inlet 21k, and the liquid inlet 21k is hermetically sealed with a disc-shaped sealing member 15.

In the case lid member 21, an elliptic valve hole 21i is provided around the center as viewed in the battery width direction BH. A safety valve member 30 in the form of an elliptic plate including a safety valve portion 31 of a pressure relief type is mounted in the valve hole 21i via an elongated annular valve fixing resin member 40 (see FIG. 1 through FIG. 4). That is, the valve fixing resin member 40 is interposed between a hole surrounding portion 23 of the case lid member 21 surrounding the valve hole 21i and a peripheral portion 33 of the safety valve member 30, and is hermetically joined to the hole surrounding portion 23 and the peripheral portion 33 over the entire circumferences thereof to fix the safety valve member 30 to the case lid member 21.

The safety valve member 30 is a metal plate (an aluminum plate in this embodiment) in the shape of an ellipse that is slightly smaller than the valve hole 21i and has a thickness tb of 500 µm or less (the thickness tb is equal to 80 µm in this embodiment) that is smaller than the thickness ta of the case lid member 21. The dimension of the safety valve member 30 measured in the long-side (major-axis) direction (the battery width direction BH) is 15 mm, and the dimension measured in the short-side (minor-axis) direction (the battery thickness direction CH) is 5 mm. In this embodiment, the whole of the central portion of the safety valve member 30 excluding the peripheral portion 33 provides the pressure relief type safety valve portion 31 that fractures and opens when the internal pressure of the case 10 exceeds the valve opening pressure. The safety valve portion 31 is press-formed, and has a fracture section 32 of a predetermined shape consisting of V-shaped grooves. The thickness measured at the bottom of the V-shaped grooves of the fracture section 32 (i.e., the thickness of the thinnest part of the safety valve portion 31) is 50 µm.

The valve fixing resin member 40 is joined to the peripheral portion 33 of the safety valve member 30. Specifically, regions of the surface 33m of the peripheral portion 33 excluding an outer peripheral end surface, i.e., a peripheral portion outer surface 33ma facing the outside (the upper side AH1 in this embodiment) and a peripheral portion inner surface 33mb facing the inside (the lower side AH2 in the battery height direction AH in this embodiment), each have an elongated annular shape extending over the entire circumference of the peripheral portion 33, and provide valve periphery roughened portions 34 (a first valve periphery roughened portion 34a and a second valve periphery roughened portion 34b) that are roughened. The width (sealing width) of each of the first valve periphery roughened portion 34a (the peripheral portion outer surface 33ma) and the second valve periphery roughened portion 34b (the peripheral portion inner surface 33mb) is 0.5 mm or more (0.5 mm in this embodiment).

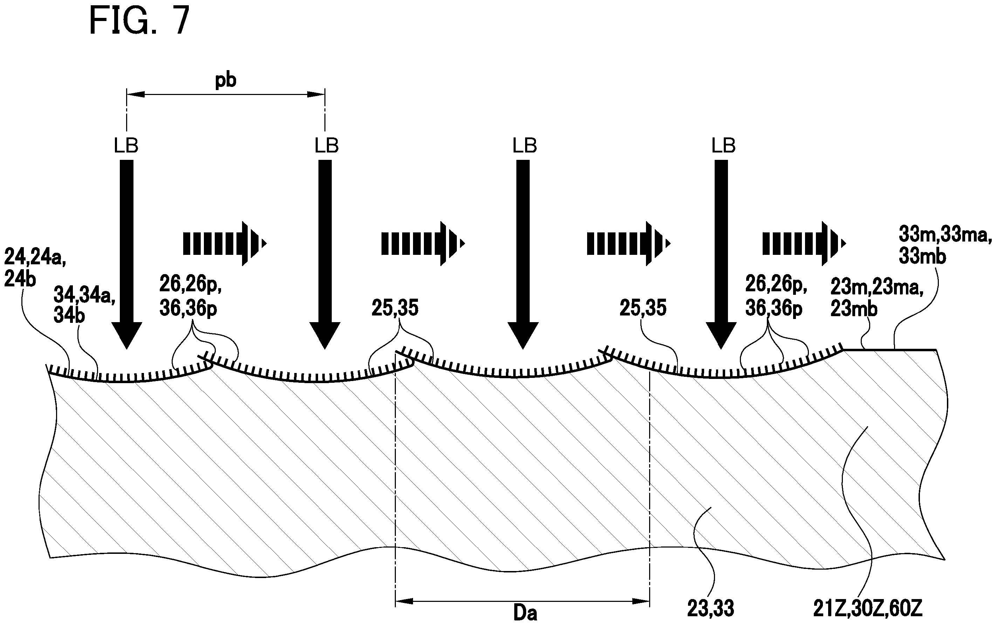

The valve periphery roughened portion 34 is a nano-level nano-roughened portion that is roughened with a pulsed laser beam LB that will be described below (see FIG. 7). Specifically, in the valve periphery roughened portion 34, numerous bowl-shaped recesses 35 that are dented in the shape of bowls or impact craters and have a diameter Da of 30 µm to 300 µm (the diameter Da is generally equal to 80 µm in this embodiment) are arranged while partially overlapping (see FIG. 7). On the bowl-shaped recesses 35, nanocolumns 36 formed by joining particles 36p derived from metal that forms the safety valve member 30 together like strings of beads into the form of columns and having a height ha of 50 nm or more (the height ha is generally equal to 200 nm in this embodiment) stand together in large numbers (see FIG. 5 and FIG. 7). The metal that forms the safety valve member 30 is aluminum as described above, and the nanocolumn 36 is made up of the particles 36p of aluminum and aluminum oxide.

The valve fixing resin member 40 is also joined to the hole surrounding portion 23 of the case lid member 21. Specifically, regions of the surface 23m of the hole surrounding portion 23 excluding a hole inner circumferential surface, i.e., a surrounding portion outer surface 23ma facing the outside (the upper side AH1 in this embodiment) and a surrounding portion inner surface 23mb facing the inside (the lower side AH2 in this embodiment), each have an elongated annular shape extending over the entire circumference of the hole surrounding portion 23, and provide hole surrounding roughened portions 24 (a first hole surrounding roughened portion 24a and a second hole surrounding roughened portion 24b) that are roughened. The width (sealing width) of each of the first hole surrounding roughened portion 24a (the surrounding portion outer surface 23ma) and the second hole surrounding roughened portion 24b (the surrounding portion inner surface 23mb) is 0.5 mm or more (0.5 mm in this embodiment).

Like the valve periphery roughened portion 34 of the safety valve member 30 described above, the hole surrounding roughened portion 24 is a nano-level nano-roughened portion. Specifically, the hole surrounding roughened portion 24 has numerous bowl-shaped recesses 25 (see FIG. 7), and nanocolumns 26 formed by joining particles 26p derived from metal (specifically, aluminum) that forms the case lid member 21 together like strings of beads into the form of columns and having a height ha of 50 nm or more (the height ha is generally equal to 200 nm in this embodiment) stand together in large numbers on each bowl-shaped recess 25 (see FIG. 5 and FIG. 7).

The valve fixing resin member 40 is made of a thermoplastic resin material 41. The resin material 41 includes a thermoplastic main resin (polyphenylene sulfide (PPS) in this embodiment), a thermoplastic elastomer (thermoplastic polyurethane elastomer in this embodiment), and a filler (fibrous glass filler in this embodiment). With the resin material 41 filling gaps between the nanocolumns 36 standing numerously on the valve periphery roughened portions 34 of the safety valve member 30, the valve fixing resin member 40 is hermetically joined with strong joining force to the valve periphery roughened portions 34 over the entire circumference. With the resin material 41 filling gaps between the nanocolumns 26 standing numerously on the hole surrounding roughened portions 24 of the case lid member 21, the valve fixing resin member 40 is also hermetically joined with strong joining force to the hole surrounding roughened portions 24 over the entire circumference.

The above resin material 41 that forms the valve fixing resin member 40 softens or melts at approximately 250°C. Therefore, the valve fixing resin member 40 and the safety valve member 30 described above constitute a thermal relief type safety valve 45 that opens as the resin material 41 softens or melts when the temperature of the valve fixing resin member 40 rises, more specifically, when the temperature of the valve fixing resin member 40 reaches about 250°C.

Next, the terminal members 60 and the terminal fixing resin members 70 will be described (see FIG. 1 and FIG. 2). Rectangular insertion holes 21hs are respectively provided in portions of the case lid member 21 near its ends on one side BH1 and the other side BH2 in the battery width direction BH. The terminal member 60 of the positive electrode made of aluminum is inserted through the insertion hole 21h on the one side BH1, and the terminal fixing resin member 70 of the positive electrode is hermetically joined to the case lid member 21 and the terminal member 60 while insulating the case lid member 21 and the terminal member 60 from each other, to fix the terminal member 60 to the case lid member 21. The terminal member 60 of the negative electrode made of copper is inserted through the insertion hole 21h on the other side BH2, and the terminal fixing resin member 70 of the negative electrode is hermetically joined to the case lid member 21 and the terminal member 60 while insulating the case lid member 21 and the terminal member 60 from each other, to fix the terminal member 60 to the case lid member 21. The positive and negative terminal members 60 have substantially the same configuration, and the positive and negative terminal fixing resin members 70 have substantially the same configuration; therefore, they will be described collectively below.

Each terminal member 60 is formed by pressing a metal plate (an aluminum plate for the positive electrode, a copper plate for the negative electrode). The terminal member 60 consists of a terminal top plate 60a in the form of a rectangular plate located on the upper side AH1 of the case lid member 21 and extending in the battery width direction BH and the battery thickness direction CH, and a terminal extension 60b extending from the terminal top plate 60a to the lower side AH2 in the battery height direction AH. The terminal extension 60b is bent at an end portion of the terminal top plate 60a on one side CH1 in the battery thickness direction CH and extends to the lower side AH2 through the insertion hole 21h of the case lid member 21, and further through the terminal fixing resin member 70. The terminal extension 60b of the positive electrode is welded at its distal end portion on the lower side AH2 to the positive current collector 50c of the electrode body 50. On the other hand, the terminal extension 60b of the negative electrode is welded at its distal end portion on the lower side AH2 to the negative current collector 50d of the electrode body 50.

The terminal fixing resin member 70 is made of a thermoplastic resin material 71. The resin material 71 is the same as the resin material 41 that forms the valve fixing resin member 40 in this embodiment, but the resin material 71 and the resin material 41 may be different resin materials. The terminal fixing resin member 70 is hermetically joined to a portion of the case lid member 21 surrounding the insertion hole 21h, and also hermetically joined to a portion of the terminal member 60 near the insertion hole 21h, to fix the terminal member 60 to the case lid member 21.

Although detailed description is omitted, the portions of the case lid member 21 to which the terminal fixing resin members 70 are joined and the portions of the terminal members 60 to which the terminal fixing resin members 70 are joined are respectively provided with nano-level nano-roughened portions on which the nanocolumns as described above stand together in large numbers. Thus, the terminal fixing resin members 70 are hermetically joined with strong joining force to the case lid member 21 and the terminal members 60 with the resin material 71 filling gaps between the nanocolumns standing numerously on the nano-roughened portions.

In the battery 1 of this embodiment, the safety valve member 30 including the pressure relief type safety valve portion 31 that fractures and opens when the internal pressure of the case 10 rises is fixed to the case lid member 21 via the valve fixing resin member 40. Since the safety valve member 30 is a separate member from the case lid member 21 and is formed separately from the case lid member 21, the safety valve member 30 of a desired shape can be properly formed without being affected by the thickness ta and material of the case lid member 21. The safety valve member 30 is then fixed to the case lid member 21 via the valve fixing resin member 40, so that the safety valve portion 31 can be easily provided in the case lid member 21.

The valve fixing resin member 40 made of resin is softer than the case lid member 21 made of metal. Therefore, even if distortion occurs in the case lid member 21 when the case 10 is formed by welding the peripheral portion 21f of the case lid member 21 all around to the opening portion 11c of the case body 11, distortion is less likely or unlikely to occur in the safety valve member 30 connected to the case lid member 21 via the valve fixing resin member 40. Thus, in the battery 1, even if distortion occurs in the case lid member 21, there is little distortion in the safety valve member 30, and the adverse influence on the valve opening pressure of the safety valve portion 31, for example, can be reduced.

Furthermore, in this embodiment, the valve fixing resin member 40 is made of the thermoplastic resin material 41, and the safety valve member 30 and the valve fixing resin member 40 constitute the thermal relief type safety valve 45 that opens as the temperature rises. That is, the battery 1 has the pressure relief type safety valve portion 31 and also has the thermal relief type safety valve 45. Thus, the battery 1 can be an even safer battery.

In this embodiment, the nano-level hole surrounding roughened portions 24 on which the nanocolumns 26 stand numerously are provided in the hole surrounding portion 23 of the case lid member 21, and the valve fixing resin member 40 is hermetically joined to the hole surrounding roughened portions 24 with the resin material 41 filling gaps between the nanocolumns 26 standing numerously. Therefore, the seal performance and joining strength between the hole surrounding portion 23 of the case lid member 21 and the valve fixing resin member 40 can be enhanced.

The nano-level valve periphery roughened portions 34 on which the nanocolumns 36 stand numerously are provided in the peripheral portion 33 of the safety valve member 30, and the valve fixing resin member 40 is hermetically joined to the valve periphery roughened portions 34 with the resin material 41 filling gaps between the nanocolumns 36 standing numerously. Therefore, the seal performance and joining strength between the peripheral portion 33 of the safety valve member 30 and the valve fixing resin member 40 can be enhanced.

In this embodiment, a thin aluminum plate having a thickness tb of 500 µm or less is used as the safety valve member 30; therefore, the safety valve portion 31 can be easily and highly accurately formed by press forming. Thus, the battery 1 is equipped with the safety valve member 30 in which the valve opening pressure of the safety valve portion 31 is particularly stable.

Since the case lid member 21 and the safety valve member 30 are separate members, the safety valve portion 31 can be easily and highly accurately press-formed in the safety valve member 30 regardless of the thickness ta of the case lid member 21. Accordingly, the battery 1 is equipped with the safety valve member 30 in which the valve opening pressure of the safety valve portion 31 is particularly stable, even though the case lid member 21 is formed from an aluminum plate with the thickness ta of 600 µm or more.

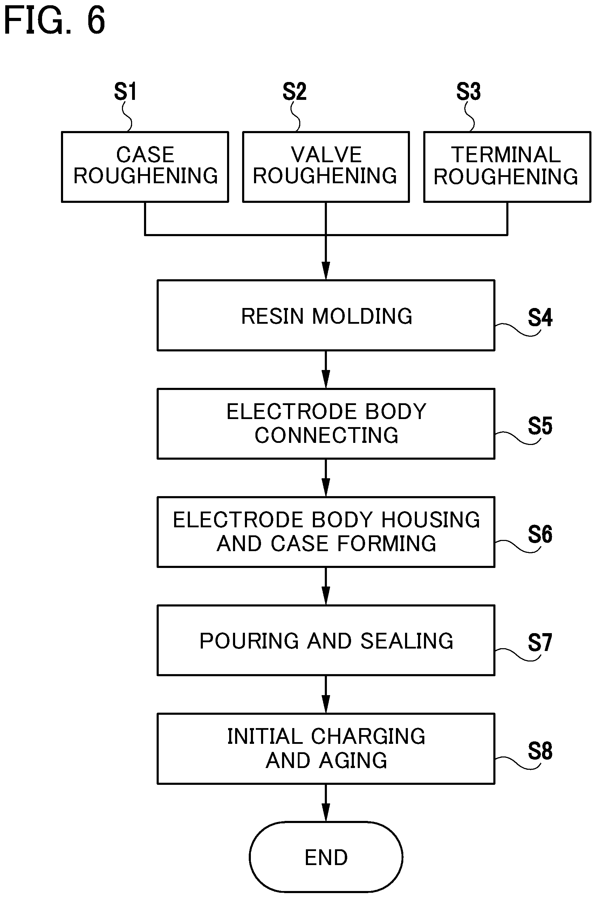

Next, a method of manufacturing the battery 1 described above will be described (see FIG. 6 and FIG. 7). First, a case lid member 21Z before roughening, a safety valve member 30Z before roughening, and positive and negative terminal members 60Z before roughening are prepared. The safety valve portion 31 including the fracture section 32 is formed by press forming in the safety valve member 30Z before roughening.

Then, in a case roughening step S1 (see FIG. 6), a pulsed laser beam LB is intermittently applied to the surrounding portion outer surface 23ma and surrounding portion inner surface 23mb of the surface 23m of the hole surrounding portion 23 of the above case lid member 21Z while shifting the irradiation position, to form the hole surrounding roughened portions 24 (the first hole surrounding roughened portion 24a and the second hole surrounding roughened portion 24b) in which numerous bowl-shaped recesses 25 on which the nanocolumns 26 stand numerously are arranged while partially overlapping (see FIG. 7). The irradiation conditions of the laser beam are set as follows: the wavelength is 1064 nm, the peak power is 5 kW, the pulse width is 150 ns, the pitch pb is 75 µm, and the spot diameter Da is 80 µm. Similarly, a pulsed laser beam LB is intermittently applied to portions of the case lid member 21Z surrounding the pair of insertion holes 21h, to form the nano-roughened portions.

In the portions of the case lid member 21Z which are irradiated with the pulsed laser beam LB, metal (specifically, aluminum) near the surface is melted and further turned into vapor. As the temperature of the vapor then decreases, the vapor turns into the particles 26p of aluminum and aluminum oxide, which are then deposited on the bowl-shaped recesses 25. By intermittently applying the pulsed laser beam LB to the case lid member 21Z while shifting the irradiation position, the particles 26p are deposited and joined together like strings of beads into the form of columns, to form the nanocolumns 26 standing together in large numbers (see FIG. 5 and FIG. 7).

Meanwhile, in a valve roughening step S2 (see FIG. 6), a pulsed laser beam LB is intermittently applied to the peripheral portion outer surface 33ma and peripheral portion inner surface 33mb of the surface 33m of the peripheral portion 33 of the above safety valve member 30Z while shifting the irradiation position, to form the valve periphery roughened portions 34 (the first valve periphery roughened portion 34a and the second valve periphery roughened portion 34b) in which numerous bowl-shaped recesses 35 on which the nanocolumns 36 stand numerously are arranged while partially overlapping (see FIG. 7). The irradiation conditions of the laser beam for the safety valve member 30Z are the same as those in the case roughening step S1.

Meanwhile, in a terminal roughening step S3 (see FIG. 6), a pulsed laser beam LB is intermittently applied to predetermined portions of the positive and negative terminal members 60Z described above while shifting the irradiation position, to form the nano-roughened portions.

Then, in a resin molding step S4, with the use of a molding die (not shown), the safety valve member 30 is disposed in the valve hole 21i of the case lid member 21, and the positive and negative terminal members 60 are inserted through the pair of insertion holes 21h of the case lid member 21. Then, the molten resin of the resin materials 41, 71 is injected into each cavity (not shown), so that the valve fixing resin member 40 joined to the case lid member 21 and the safety valve member 30 is insert-molded, and a pair of terminal fixing resin members 70 joined to the case lid member 21 and the positive and negative terminal members 60 is insert-molded.

Then, in an electrode body connecting step S5, the electrode body 50 obtained by stacking the positive electrode sheets 51, negative electrode sheets 52, and separators 53 is prepared, and the terminal extension 60b of the terminal member 60 of the positive electrode is ultrasonically welded to the positive current collector 50c of the electrode body 50. The terminal extension 60b of the terminal member 60 of the negative electrode is also ultrasonically welded to the negative current collector 50d of the electrode body 50. The electrode body 50 is then wrapped with the bag-like insulating holder 7.

Then, in an electrode body housing and case forming step S6, the case body 11 is prepared, the electrode body 50 covered with the insulating holder 7 is inserted into the case body 11, and the opening portion 11c of the case body 11 is closed with the case lid member 21. Then, the opening portion 11c of the case body 11 and the peripheral portion 21f of the case lid member 21 are laser welded hermetically over the entire circumference to form the case 10.

Then, in a pouring and sealing step S7, the electrolyte 5 is poured into the case 10 through the liquid inlet 21k, so that the electrode body 50 is impregnated with the electrolyte 5. Then, the liquid inlet 21k is hermetically sealed with the sealing member 15.

Then, in an initial charging and aging step S8, initial charging is performed on the battery 1. Then, the battery 1 is left to stand for a predetermined time so that the battery 1 is aged. In this manner, the battery 1 is completed.

### Modified Embodiment

Next, a modified embodiment of the disclosure will be described (see FIG. 1 through FIG. 4). Description of portions or components similar to those of the above embodiment will be omitted or simplified. In the battery 1 of the above embodiment, the case 10 is formed from an aluminum plate. In contrast, in a battery (one example of the power storage device of the disclosure) 100 of the modified embodiment, a case 110 is formed from a stainless steel plate, unlike the battery 1. That is, the case 110 consists of a case body 111 formed from a stainless steel plate and a case lid member (case member) 121 formed from a stainless steel plate. On the other hand, the safety valve member 30 having the safety valve portion 31 is the same as that of the above embodiment.

In the modified embodiment, too, the case lid member 121 and the safety valve member 30 are separate members. Therefore, the safety valve portion 31 can be easily and highly accurately press-formed in the safety valve member 30 regardless of the material of the case lid member 121. Accordingly, the battery 100 is equipped with the safety valve member 30 in which the valve opening pressure of the safety valve portion 31 is particularly stable, even though the case lid member 121 is made of a metal other than aluminum. The other portions of the battery 100 of the modified embodiment similar to those of the embodiment provide substantially the same effects as those provided by the embodiment.

While the disclosure has been described in the light of the embodiment and the modified embodiment, it is to be understood that the disclosure is not limited to the embodiment and the modified embodiment, but may be applied by making changes as needed, without departing from the principle of the disclosure.

### Reference Signs List

- 1, 100: Battery (Power storage device)
- 10, 110: Case
- 11, 111: Case body
- 21, 121: Case lid member (Case member)
- 21i: Valve hole
- 23: Hole surrounding portion
- 24: Hole surrounding roughened portion
- 24a: First hole surrounding roughened portion
- 24b: Second hole surrounding roughened portion
- 26: Nanocolumn
- 26p: Particle
- 30: Safety valve member
- 31: Safety valve portion (of pressure relief type)
- 33: Peripheral portion (of safety valve member)
- 34: Valve periphery roughened portion
- 34a: First valve periphery roughened portion
- 34b: Second valve periphery roughened portion
- 36: Nanocolumn
- 36p: Particle
- 40: Valve fixing resin member

- 41: Resin material
- 45: Safety valve (of thermal relief type)
- 50: Electrode body
- 60: Terminal member
- 70: Terminal fixing resin member
- ta: Thickness (of case lid member)
- tb: Thickness (of safety valve member)
- ha: Height (of nanocolumn)

## Claims

1. A power storage device (1;100) comprising:
a case (10; 110) having a case member (21; 121) comprising metal and including a valve hole (21i);
a safety valve member (30) comprising metal and including a safety valve portion (31) of a pressure relief type configured to fracture and open when an internal pressure of the case (10; 110) exceeds a valve opening pressure; and
a valve fixing resin member (40) comprising resin and encircling the safety valve member (30), the valve fixing resin member being interposed between a hole surrounding portion (23) of the case member (21;121) surrounding the valve hole (21i) and a peripheral portion (33) of the safety valve member (30) to be hermetically joined to the hole surrounding portion and the peripheral portion over the entire circumferences and fix the safety valve member to the case member.

2. The power storage device (1;100) according to claim 1, wherein:
the valve fixing resin member (40) comprises a thermoplastic resin material (41); and
the safety valve member (30) and the valve fixing resin member (40) constitute a safety valve (45) of a thermal relief type configured to open when the resin material (41) softens or melts due to a temperature rise of the valve fixing resin member (40).

3. The power storage device (1;100) according to claim 1 or claim 2, wherein:
the hole surrounding portion (23) of the case member (21;121) includes a hole surrounding roughened portion (24,24a,24b) that extends endlessly over the entire circumference of the hole surrounding portion (23) and has nanocolumns (26) formed by joining particles (26p) derived from the metal that forms the case member (21;121) together like strings of beads into the form of columns and having a height (ha) of 50 nm or more, the nanocolumns standing numerously on the hole surrounding roughened portion; and
the valve fixing resin member (40) is hermetically joined to the hole surrounding roughened portion (24,24a,24b) over the entire circumference such that the resin material (41) that forms the valve fixing resin member (40) fills gaps between the nanocolumns (26) standing numerously.

4. The power storage device (1; 100) according to any one of claims 1 to 3, wherein:
the peripheral portion (33) of the safety valve member (30) includes a valve periphery roughened portion (34,34a,34b) that extends endlessly over the entire circumference of the peripheral portion and has nanocolumns (36) formed by joining particles (36p) derived from the metal that forms the safety valve member (30) together like strings of beads into the form of columns and having a height (ha) of 50 nm or more, the nanocolumns standing numerously on the valve periphery roughened portion (34,34a,34b); and
the valve fixing resin member (40) is hermetically joined to the valve periphery roughened portion (34,34a,34b) over the entire circumference such that the resin material (41) that forms the valve fixing resin member fills gaps between the nanocolumns (36) standing numerously.

5. The power storage device (1; 100) according to any one of claims 1 to 4, wherein:
the safety valve member (30) is formed from an aluminum plate having a thickness (tb) of 500 µm or less; and
the safety valve portion (31) is press-formed.

6. The power storage device (1) according to claim 5, wherein the case member (21) is formed from an aluminum plate having a thickness (ta) of 600 µm or more.

7. The power storage device (100) according to claim 5, wherein the case member (121) comprises a metal other than aluminum.
